# EUROPEAN PATENT APPLICATION

(11) **EP 4 542 204 A1**
(43) Date of publication of application: **23.04.2025**
(21) Application number: 23204352.1
(22) Date of filing: 18.10.2023
(51) Int. Cl.: G01N 21/63, G01N 15/00

(54) **METHOD, COMPUTER READABLE MEDIUM AND APPARATUS FOR DETERMINING AN AGGREGATION STATE OF A SOLUTE IN A SOLVENT**

(71) Applicant: École Polytechnique Fédérale de Lausanne (EPFL), 1015 Lausanne (CH)
(72) Inventor: Tarun, Orly, 1020 Renens (CH); Dupertuis, Nathan, 1004 Lausanne (CH); Roke, Sylvie, 1025 St. Sulpice VD (CH)
(74) Representative: Cohausz & Florack

(57) **Abstract**

Method for determining an aggregation state of a solute in a solvent, comprising: illuminating (702), with a laser source, at least one mixture comprising the solute and the solvent with a pulsed laser beam, detecting (704), with a detector, a portion of the pulsed laser beam, wherein the portion of the pulsed laser beam has interacted with the at least one mixture, characterized in that detecting (704) a portion of the pulsed laser beam comprises: detecting non-resonant second harmonic photons, wherein the non-resonant second harmonic photons issue from an interaction of the pulsed laser beam with the solvent of the at least one mixture, and determining (706) at least one value indicative of the non-resonant second harmonic photons detected for the at least one mixture, and in that the method further comprises: determining (708) at least one characteristic for an aggregation behavior of the solute in the solvent on the basis of the at least one value indicative of the detected non-resonant second harmonic photons determined for the at least one mixture. A computer readable medium and an apparatus (300, 400, 500, 600) are described.

## Description

The present invention relates to a method for determining an aggregation state of a solute in a solvent, comprising: illuminating, with a laser source, at least one mixture comprising the solute and the solvent with a pulsed laser beam, detecting, with a detector, a portion of the pulsed laser beam, wherein the portion of the pulsed laser beam has interacted with the at least one mixture. The present invention further relates to a computer readable medium and an apparatus.

Light scattering is known for observing the aggregation of substances. Light scattering occurs when light encounters non-uniformities and deviates from its otherwise straight trajectory. These non-uniformities can be molecules, particles or fluctuations in the medium with sizes similar or smaller than the wavelength of light. Already known methods rely on linear light scattering such as dynamic light scattering and laser-based nephelometry, with which the linear light scattering of substances in liquid medium, recorded at the same wavelength as the illumination beam, can be detected. The related physical mechanism relies on recording changes in the refractive index of the liquid induced by the non-uniformities in the liquid such as nano- to micron-sized aggregates. This type of light scattering is fast and versatile but is limited by its unspecificity and the high detection limit, which means a limit for a minimum concentration, e.g. a limit of at least 20 µM, and size of the analyzed substance particles or aggregates, e. g. a minimum size of at least 1 nm, is needed before the method can reliably detect it. Other methods include Raman scattering which adds chemical specificity. However, for Raman scattering, a detection limit is observed for the analyzed substance particles or aggregates.

Second harmonic scattering (SHS) is a second-order nonlinear optical method where two incoming photons interacting with a material or substance combine into a second harmonic (SH) photon that is the sum of the frequencies of the incoming photons (e.g., two 1030 nm photons may convert into one 515 nm photon). Second harmonic generation has been first demonstrated in 1965 and evidences a contrast mechanism. The contrast for SHS is determined by the molecular hyperpolarizability of the material with which the incoming photons interact, which molecular hyperpolarizability is non-zero for any anisotropic molecule. In order to generate coherent SH photons (e.g. with an electric-dipole approximation), the spatial distribution of molecules in the material or substance should be anisotropic. Besides coherent SH photons, there is also a weak incoherent emission of photons from isotropic distributions of anisotropic molecules, called Hyper Rayleigh Scattering (HRS). This property of SHS provides structural sensitivity and makes it selective to how substances aggregate. Moreover, the emission at different wavelength than the illumination beam provides back-ground free measurements that improves signal to noise ratio.

Second harmonic generation has been used in observing the aggregation or micellization of fluorophores using resonance enhancement induced by the resonant hyperpolarizability of the fluorophore. Non-resonantly enhanced SHG has been used by taking advantage of the non-centrosymmetric structure of crystals to study protein crystallization, kinetics and growth of crystals, the formation and growth of metal organic frameworks, and to track bioharmonophores in tumor detection. Non-resonantly enhanced SHG has also been used to explore micellization of surfactants that aggregate when in a mixture having a concentration with an order of magnitude around 10 mM.

State-of-the-art methods measure the solubility limit by either detecting the aggregates directly or by measuring the amount of dissolved compounds. The first method is based on linear scattering, as for instance nephelometry, and as previously discussed is limited by detection limit. The second method involves first separating the dissolved compounds, and then measuring the isolated amount. Separation either involves filtration, centrifugation or column separation using high performance liquid chromatography (HPLC). The separated compounds are then measured using UV-Vis or mass spectrometry. Here, because of the separation step, this method is burdened by the need to use more consumables and compounds, generating a lot of waste. The found solubility value is also heavily biased by the chosen method of filtration/separation. Moreover, for poorly soluble compounds, the dissolved amount is scarce, requiring reliable and sensitive parts-per-million detectors (e.g. high-resolution mass spectrometry) to obtain meaningful measurements.

Against this background, it is an object of the present invention to provide a method and means for observing the aggregation of a solute in a solvent, and in particular to improve the known methods and devices.

The object named above is solved in accordance with the present invention by a method for determining an aggregation state of a solute in a solvent, comprising: illuminating, with a laser source, at least one mixture comprising the solute and the solvent with a pulsed laser beam, detecting, with a detector, a portion of the pulsed laser beam, wherein the portion of the pulsed laser beam has interacted with the at least one mixture, characterized in that detecting a portion of the pulsed laser beam comprises: detecting non-resonant second harmonic photons, wherein the non-resonant second harmonic photons issue from an interaction of the pulsed laser beam with the solvent of the at least one mixture, and determining at least one value indicative of the non-resonant second harmonic photons detected for the at least one mixture, and in that the method further comprises: determining at least one characteristic for an aggregation behavior of the solute in the solvent on the basis of the at least one value indicative of the detected non-resonant second harmonic photons determined for the at least one mixture.

This method allows for determining a characteristic of aggregation of the solute by probing second harmonic photons issued from an interaction with the solvent. In particular, the method allows to observe the aggregation of substances in liquid medium. For performing the method, high photon throughput second harmonic scattering may be used to observe the restructuring of the solvent molecules around substances as the substances undergo different stages of aggregation. The substance can be any organic or inorganic in solid, liquid or gas form so long as it is dispersed in a liquid medium. A number of applications involving aggregation is possible including measurement of the solubility limit of substances. Examples of applications of monitoring aggregation include purity measurements, crystallization, contaminant detection and protein folding and aggregation. The proposed method is fast, in particular due to light-scattering, uses minimum amount of resources and is ultra-sensitive.

Using high throughput SHS allows for generating a signal to noise that is sufficient to measure small changes induced in the solvent by tiny amounts of solute, in particular in the order of magnitude of femtomolar concentration of the solute in the solvent. The number of detected photons and the signal to noise obtained by probing second harmonic photons issued from an interaction with the solvent is higher compared to detecting the second harmonic response of the solute itself, in particular when there are more solvent molecules then solute molecules in the mixture. Thus, it is no longer needed to rely on enhancement by the solute, as has traditionally been done in SHS.

A major requirement to reproducibly measure the solubility limit is to reliably distinguish the aggregates from dissolved compounds with high sensitivity (e.g., monomers from dimers, timers, etc.). Comparative experiments showed that, by using SHS, reproducible measurements can be produced, whereas already known methods such as nephelometry show large relative error. Moreover, it is straightforward for SHS to distinguish the concentration at which a jump in intensity occurs, in particular for a so-called pre-aggregation region relative to the baseline, which baseline is representative for monomers or dissolved compounds. Nephelometry, however, often presents poor reproducibility and requires an excess of compound and a fitting routine, e.g. linear model, projected to the baseline to determine the solubility limit. Compared to nephelometry, SHS provides sensitive and reproducible measurements with straightforward analysis. Accordingly, calibration and fitting routine may be omitted.

A value indicative of the detected non-resonant second harmonic photons may be a count of photons, a logarithmic value of a count of photons, an intensity of signal detected by the detector, and/ or any mathematical transformation of the count of photons or intensity of signal.

The solute may be any organic or inorganic substance and the solvent may be a liquid medium. The at least one mixture may contain the solute at any state of an aggregation process, e.g. individual dissolved units such as monomers, aggregates of any kind, dimer, trimer, quadrimers, etc., or any other transitional state from monomers to aggregates. The at least one mixture may be a solution, a mixture or a turbid medium. Preferably, the at least one mixture has a concentration of solute in the solvent comprised in the range from 0 to 10 mM, in particular in the range from 0 to 10 mM, more particularly in the range from 0 to 1000 µM, preferably in the range from 0 to 800 µM, more preferably in the range from 0 to 500 µM.

The object named above is further solved in accordance with the present invention by a computer readable medium comprising instructions which, when executed by an apparatus, cause the apparatus to perform at least the following: determining at least one value indicative of detected non-resonant second harmonic photons, wherein the non-resonant second harmonic photons issue from an interaction of a pulsed laser beam with a solvent of a mixture comprising the solvent and a solute, and determining at least one characteristic for an aggregation behavior of the solute on the basis of the at least one value indicative of the detected second harmonic photons.

The object named above is further solved in accordance with the present invention by an apparatus for determining an aggregation state of a solute in a solvent, in particular for determining an aggregation state of a solute in a solvent according to the present disclosure, comprising: a laser source configured for emitting a pulsed laser beam, a separator for separating a scattered portion of the pulsed laser beam from a non-scattered portion of the pulsed laser beam, and a detector configured for detecting, at least in part, the scattered portion of the pulsed laser beam emitted by the laser source, characterized in that a processor with a computer readable medium according to the present disclosure is provided.

The computer readable medium and the apparatus present at least the same advantages as the method.

It is to be noted that the disclosed method, computer readable medium and apparatus may be used for monitoring a dissolution or decomposition of a substance or solute in a solvent, as well as for monitoring an aggregation of a substance or solute in a solvent. In the case of monitoring a dissolution or decomposition, the term "aggregation" used in the description of the method, computer readable medium and apparatus may be replaced by "dissolution or decomposition".

Various embodiments of the method, the computer readable medium and the apparatus are described in the following. The individual embodiments are in each case individually applicable to the method, the computer readable medium and the apparatus. The individual embodiments may furthermore be combined with each other at will.

An exemplary embodiment of the method is disclosed, wherein, for the at least one mixture, a plurality of values indicative of the detected non-resonant second harmonic photons is determined, wherein at least one statistical value is determined for the plurality of values indicative of the detected non-resonant second harmonic photons, and wherein the at least one characteristic for the aggregation behavior of the solute in the solvent is determined on the basis of a comparison of the at least one statistical value with a predetermined threshold value.

Correspondingly, an exemplary embodiment of the computer readable medium is disclosed, further comprising instructions, which when executed by the apparatus, cause the apparatus to perform at least the following: determining a plurality of values indicative of the non-resonant second harmonic photons detected for the at least one mixture, determining at least one statistical value for the plurality of values indicative of the non-resonant second harmonic photons detected for the at least one mixture, comparing the at least one statistical value with a predetermined threshold value, and determining the at least one characteristic for the aggregation behavior of the solute in the solvent on the basis of the comparison.

The threshold value may be known or predetermined from previous measurements and be indicative of known state of aggregation of the solute in the solvent. Comparing the statistical value determined by probing a mixture with an unknown state of aggregation with the threshold allows for characterizing the probed mixture.

An exemplary embodiment of the method is disclosed, wherein the at least one mixture comprises a first mixture and a second mixture, wherein at least one value indicative of the non-resonant second harmonic photons detected for the first mixture is determined, and wherein at least one value indicative of the non-resonant second harmonic photons detected for the second mixture is determined, and wherein the at least one characteristic for an aggregation behavior of the solute in the solvent is determined on the basis of the at least one value determined for the first mixture and on the basis of the at least one value determined for the second mixture.

In a corresponding manner, a method for determining an aggregation state of a solute in a solvent is disclosed, comprising: illuminating, with a laser source, a first mixture comprising the solute and the solvent with a pulsed laser beam; detecting, with a detector, a portion of the pulsed laser beam, wherein the portion of the pulsed laser beam comprises non-resonant second harmonic photons issue from an interaction of the pulsed laser beam with the solvent of the first mixture; determining at least one value indicative of the non-resonant second harmonic photons detected for the first mixture; illuminating, with the laser source, a second mixture comprising the solute and the solvent with the pulsed laser beam; detecting, with the detector, a portion of the pulsed laser beam, wherein the portion of the pulsed laser beam comprises non-resonant second harmonic photons issue from an interaction of the pulsed laser beam with the solvent of the second mixture; determining at least one value indicative of the non-resonant second harmonic photons detected for the second mixture; and determining at least one characteristic for an aggregation behavior of the solute in the solvent on the basis of the at least one value determined for the first mixture and on the basis of the at least one value determined for the second mixture.

Correspondingly, an exemplary embodiment of the computer readable medium is disclosed, further comprising instructions, which when executed by the apparatus, cause the apparatus to perform at least the following: determining a plurality of values indicative of the non-resonant second harmonic photons detected for a first mixture of the solute and the solvent, determining at least one statistical value for the plurality of values indicative of the non-resonant second harmonic photons detected for the first mixture, determining a plurality of values indicative of the non-resonant second harmonic photons detected for a second mixture of the solute and the solvent, determining at least one statistical value for the plurality of values indicative of the non-resonant second harmonic photons detected for the second mixture, comparing of the at least one first statistical value determined for the first mixture with the at least one second statistical value determined for the second mixture, and determining the at least one characteristic for the aggregation behavior of the solute in the solvent on the basis of the comparison.

By probing at least two mixtures of the solute in the solvent, in particular at least two mixtures differing from each other in terms of chemical and / or physical state or conditions, characteristics of the aggregation behavior of the solute as a function of the differences in terms of chemical and / or physical state or conditions can be determined. Thus, a monitoring of the aggregation processes across varying chemical and / or physical states or conditions can be performed.

Comparing of the at least one first statistical value determined for the first mixture with the at least one second statistical value determined for the second mixture may comprise performing a mathematical fit and / or a fitting routine using at least one of the determined statistical value. Additionally or alternatively, determining the at least one characteristic for the aggregation behavior of the solute in the solvent on the basis of the comparison may comprise performing a mathematical fit and / or a fitting routine using at least one of the determined statistical value.

An exemplary embodiment of the method is disclosed, wherein, for the first mixture, a plurality of values indicative of the non-resonant second harmonic photons detected for the first mixture is determined, and at least one first statistical value is determined for the plurality of values indicative of the detected non-resonant second harmonic photons, wherein, for the second mixture, a plurality of values indicative of the non-resonant second harmonic photons detected for the second mixture determined, and at least one second statistical value is determined for the plurality of values indicative of the detected non-resonant second harmonic photons, wherein the at least one characteristic for the aggregation behavior of the solute in the solvent is determined on the basis of a comparison of the at least one first statistical value determined for the first mixture with the at least one second statistical value determined for the second mixture.

By observing the redistribution of the solvent it is possible to already empirically observe the dynamics of aggregation from dissolved single molecules, e.g. monomers, to different stages of aggregation, e.g. an aggregation from monomers to pre-aggregation to stable aggregates of a plurality of monomers, by probing, e.g., the standard deviation of the scattered intensity. Thus, a non-destructive, cost-effective and reliable method to distinguish the different stages of aggregation with sufficient signal to noise is available without need for enhancement or labelling. The method is applicable to broad type samples such as organic and inorganic substances in solid, liquid or gas. Furthermore, additional information such as aggregate size, distribution and structural information can be obtained giving further insights into the dynamics of aggregation.

To observe the intensity fluctuations, the measurements may be repeated for a statistically significant (N>30) number of data points. To obtain meaningful information on the aggregation, the mean, variance, and / or standard deviation of the collected second harmonic intensity may be compared at different stages of aggregation, i.e., dissolved compounds as monomers, pre-aggregates and stable aggregates. The means or variance can be compared via test of means or so-called "t-test" and / or test of variance or so-called "f-test" or a simple thresholding mechanism.

An exemplary embodiment of the method is disclosed, wherein the first mixture and the second mixture differ in at least one of the following: concentration of the solute in the solvent, temperature, pressure, pH, conductivity, composition of the solvent.

In particular, the first mixture and the second mixture may exhibit differing solubilities of the solvent in the solute when having differing compositions of the solvent, e.g. when one of the first or the second mixture has a solvent comprising a surfactant and/ or further component influencing intermolecular forces between solute and solvent. When having the first mixture and the second mixture differing in the composition of the solvent, intermolecular forces between solute can be customized, e.g. for making the solvent more soluble. As an example, when providing surfactants around solute molecules, there will be mechanical and / or steric forces that prevents the solute molecules from aggregating.

The transition from individual monomers to aggregate can be induced by physical or chemical variables such as increase in substance concentration, change in physical environment such temperature, pressure, pH, conductivity and / or composition of the solvent. Therefore, the present method allows for a determination or monitoring of the aggregation process as a function of a change in such variables.

An exemplary embodiment of the method is disclosed, wherein, in the first mixture, the solute is provided in the solvent with a first concentration C_{B} and the solute is dissolved in the solvent, wherein the second mixture has a second concentration Ct of solute in the solvent, and wherein the second concentration Ct is higher than the first concentration C_{B}.

An exemplary embodiment of the method is disclosed, wherein, in the first mixture, the solute is provided in the solvent with a first concentration C_{Agg} and the solute is aggregated in the solvent, wherein the second mixture has a second concentration Ct of solute in the solvent, and wherein the second concentration Ct is lower than the first concentration C_{Agg}.

Probing a mixture with a known aggregation state or stage, as here a dissolved state or aggregated state of the solute in the solvent, serves as baseline or reference for probing further mixtures, and in particular allows for determining an unknown aggregation state of the solute in the further mixtures.

In an exemplary embodiment of the method, a plurality of 2 to X mixtures is probed, wherein the concentration of solute in the solvent is known for each mixture of the plurality of 2 to X mixtures, wherein the aggregation state of at least one of the mixture of the plurality of 2 to X mixtures is known, wherein each mixture of the plurality of 2 to X mixtures is illuminated with the pulsed laser beam, wherein for each mixture of the plurality of 2 to X mixtures non-resonant second harmonic photons issued from an interaction of the pulsed laser beam with the solvent of the mixture are detected, and wherein for each mixture of the plurality of 2 to X mixtures at least one value indicative of the non-resonant second harmonic photons detected for the mixture is determined, and wherein at least one characteristic for an aggregation behavior of the solute in the solvent is determined on the basis of a comparison of the at least one value indicative of the detected non-resonant second harmonic photons determined for at least one mixture of the plurality of 2 to X mixtures with the at least one value indicative of the detected non-resonant second harmonic photons determined for the mixture with a known aggregation state.

This allows for using known characteristics of aggregation as basis for improved study or monitoring of an aggregation process of the solute.

An exemplary embodiment of the method is disclosed, wherein the at least one statistical value comprises a standard deviation σ and / or a mean value µ.

A standard deviation indicates a distribution of values within a sample of values, thus allowing for monitoring of fluctuation of the values within the sample. A mean value may be used in complement to the standard deviation for an improved fluctuation monitoring.

An exemplary embodiment of the method is disclosed, wherein the at least one characteristic for the aggregation behavior of the solute in the solvent comprises a value range for a solubility limit or a value for a solubility limit.

An exemplary embodiment of the method is disclosed, wherein the at least one characteristic for the aggregation behavior of the solute in the solvent comprises at least one of the following: a piece of information on the presence of aggregated solute in the mixture, a piece of information on a growth of aggregates, a shape of an aggregate, a size of an aggregate, a spatial repartition or packing of aggregated solute in the solvent, a density of aggregates in the solvent, a shape difference between aggregates, a state of isotropy or anisotropy of aggregate, a chemical state of an aggregate, a surface state of an aggregate.

Accordingly, a state of aggregation or a behavior of aggregation of the solute can be specified in a reliable manner.

As an example, it can be determined, as characteristic for the aggregation behavior of the solute in the solvent, that aggregates are spherical, elongated, packed, or others.

As an example, comparing mean values and standard deviation values determined for, e.g., counts values of non-resonant second harmonic photons detected for individual mixtures of a set of sample set of a plurality of samples with mixtures having different concentrations of the same solute and the same solvent, respectively, may lead to the following, wherein σₙ and µₙ are, respectively, a standard deviation value and a mean value determined for a mixture with a first concentration of solute in a solvent, and wherein σₙ₋₁ and µₙ₋₁ are, respectively, a standard deviation value and a mean value determined for a mixture with a second concentration of solute in a solvent that is lower than the first concentration:
in a first case, when σₙ > σₙ₋₁ and µₙ > µₙ₋₁ is observed, it can be determined that non-isotropic, non-spherical aggregates of different shapes are forming;
in a second case, when σₙ < σₙ₋₁ and µₙ < µₙ₋₁ is observed, it can be determined that aggregates are transitioning to isotropic, spherical aggregates;
in a third case, when σₙ ~ σₙ₋₁, µₙ > µₙ₋₁ is observed, it can be determined that a preferred type of non-isotropic, non-spherical aggregate are forming (e.g. only dimers are forming);
in a fourth case, when σₙ ~ σₙ₋₁, µₙ ~ µₙ₋₁ is observed, it can be determined that no additional aggregates are forming.

An exemplary embodiment of the method is disclosed, wherein the solvent is provided as liquid, and wherein the solute is provided as solid or as liquid or as gas.

Aggregation may be observed for solid in liquid, for gas in liquid, for liquid in liquid, or anything else I liquid. As an example, alcohol may aggregate or dissolve in liquid water.

An exemplary embodiment of the apparatus is disclosed, wherein the laser source is configured for emitting a pulsed laser beam with a pulse energy of at least 50 nJ per pulse and a repetition rate comprised in the range from 100 kHz to 1 MHz.

Such a laser beam allows for observing the aggregation of nano- to micron-sized substances, e.g. as solid, liquid or gas, in liquid medium. In particular, a use of medium-repetition rate in combination with high pulse energy laser enables probing of the weak non-resonant second harmonic response of the solvent itself. With this enhancement it has become possible to detect non-resonant angle resolved SHS patterns of picomolars of polyelectrolytes, transient cavities of empty space in neat water, and the adsorption of femtomolars of protein on the interface of liposomes in mixture.

Further features and advantages of the method, the computer readable medium and the apparatus emerge from the following description of exemplary embodiments where reference is made to the attached drawing.

In the drawing,
- Fig. 1: shows an illustration of resonant and non-resonant second harmonic generation;
- Fig. 2: shows an illustration of three phases of a molecular aggregation;
- Fig. 3: shows a first example of an apparatus for detecting second harmonic scattering (SHS) issued from an interaction with a sample in a schematic view;
- Fig. 4: shows a second example of an apparatus for detecting second harmonic scattering (SHS) issued from an interaction with a sample in a schematic view;
- Fig. 5: shows a third example of an apparatus for detecting second harmonic scattering (SHS) issued from an interaction with a sample in a schematic view;
- Fig. 6: shows a fourth example of an apparatus for detecting second harmonic scattering (SHS) issued from an interaction with a sample in a schematic view;
- Fig. 7: shows a flow diagram for a method for determining a characteristic for an aggregation state of a solute in a solvent;
- Fig. 8a: shows a first part of a flow diagram for a second method for determining a characteristic for an aggregation behavior of a solute in a solvent;
- Fig. 8b: shows a second part of a flow diagram for the second method for determining a characteristic for an aggregation behavior of a solute in a solvent;
- Fig. 8c: shows a third part of a flow diagram for the second method for determining a characteristic for an aggregation behavior of a solute in a solvent;
- Fig. 9: shows an example for mean values determined for a plurality of mixtures of Tamoxifen in water and for a plurality of mixtures of caffeine in water;
- Fig. 10: shows an example for standard values determined for a plurality of mixtures of Tamoxifen in water and for a plurality of mixtures of caffeine in water;
- Fig. 11: shows an example for values indicative of values indicative of the detected non-resonant second harmonic photons for a plurality of mixtures of undecanol in water; and
- Fig. 12: shows an example for values indicative of values indicative of the detected non-resonant second harmonic photons for a plurality of mixtures of DMPC lipids in water.

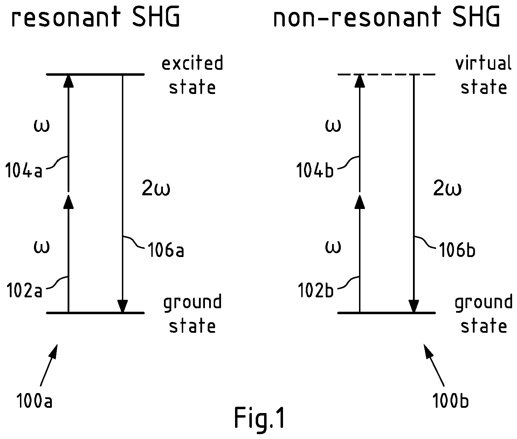

Fig. 1 shows, on the left side, an illustration of resonant second harmonic generation 100a, and, on the right side, an illustration of non-resonant second harmonic generation 100b. A first photon 102a, 102b with a first frequency and a second photon 104a, 104b with a second frequency combine into a second harmonic photon 106a, 106b having a frequency that corresponds to the sum of the first frequency with the second frequency. The shown combinations may be caused by second harmonic scattering (SHS) or a second-order nonlinear optical method.

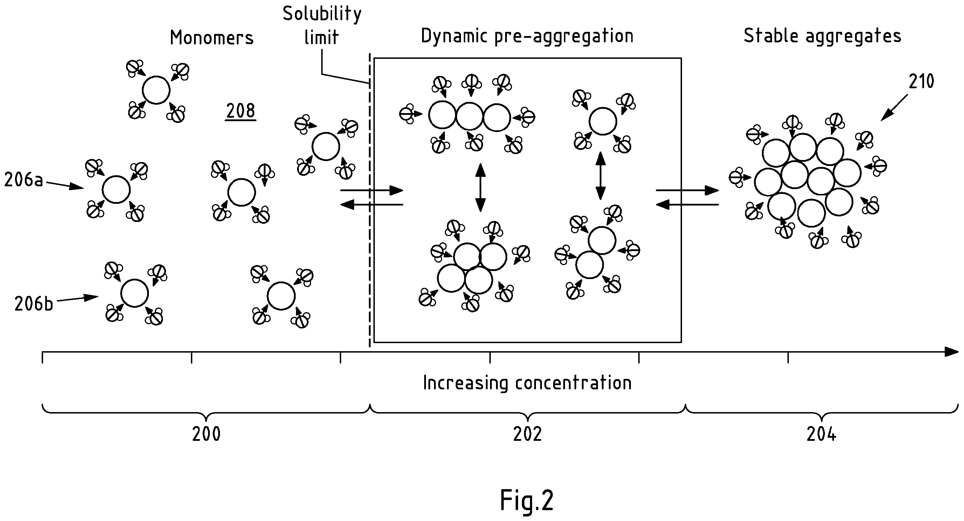

Fig. 2 shows an illustration of three phases 200, 202, 204 of molecular aggregation with a phase 200, wherein a solute has the form of monomers 206a, 206b dissolved in a solvent 208 or dissolved phase, a dynamic pre-aggregation phase 202 and a phase 204 with stable aggregates 210.

Monomers 206a, 206b and aggregates 210 have stable structures with isotropic distribution of solvent 208 molecules around them. Prior to the stable aggregation phase 204, there is a pre-aggregation phase202 that is a dynamic phase, with monomers 206a, 206b, dimers, trimers and larger clusters that co-exist and interconvert, where the distribution of solvent 208 molecules around them are changing, leading to a higher degree in structural anisotropy. The pre-aggregation phase 202 leads to a much higher second harmonic intensity in combination with intensity fluctuations or increase in the standard deviation of the SH intensity. Note that the cartoons imply a charge of the monomers/aggregates - this is only for illustration purposes.

According to statistical physics, monomers which are small and mostly centrosymmetric are surrounded by isotropic distribution of solvent molecules. With increasing concentration, this leads to dimers and larger aggregates in a non-random way. These transient aggregates during the pre-aggregation phase, are bigger, irregular objects, with a non-isotropic arrangement of solvent molecules surrounding them. Further increasing the concentration, stable aggregates that are larger and with a uniform size distribution are created with an isotropic distribution of solvent molecules surrounding them. With non-resonant second harmonic scattering that is sensitive to the spatial distribution of solvent molecules, measuring the second harmonic intensity, as well as the variability of the intensity, provides information into how the substances aggregate.

The term "solubility limit" defines the concentration of a substance above which aggregates form. Figure 2 shows the solubility limit as the transition from dissolved monomers to a dynamic changing phase of variable solute clusters. This dynamic changing phase may be a pre-aggregation that is characterized by anisotropic solvent redistribution. This result in drastic changes in the intensity, as well as in the variability of the intensity, e.g. through standard deviation, STD, as a function of concentration. This transition marks the solubility limit.

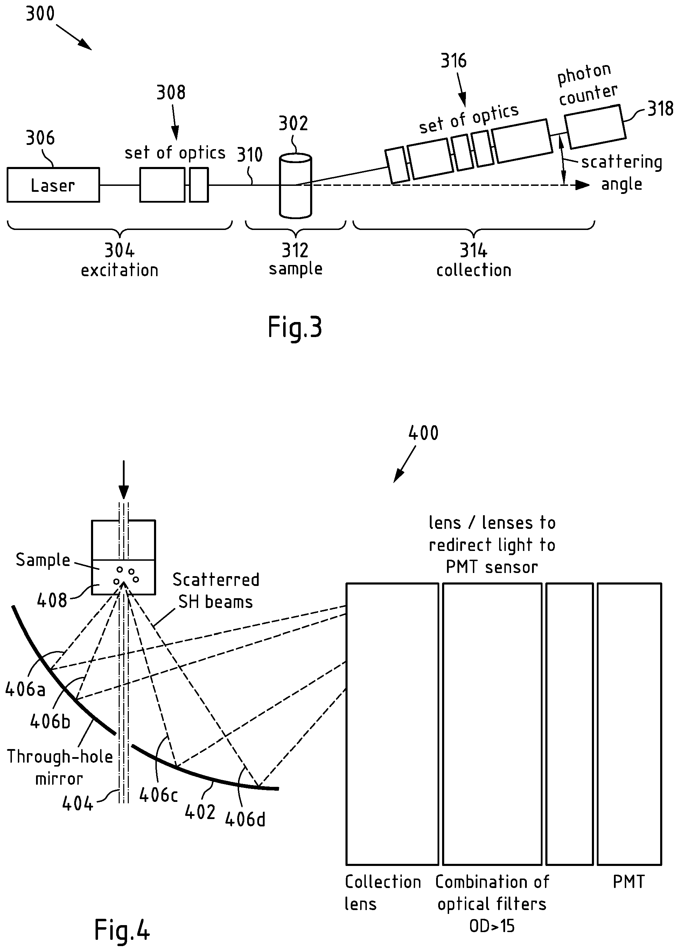

Fig. 3 shows a first example of an apparatus 300 for detecting second harmonic scattering (SHS) issued from an interaction with a sample 302 in a schematic view. The apparatus 300 comprises an excitation part 304 that comprises a laser source 306 and a set of optics 308 to process and focus a pulsed laser beam 310 emitted by the laser source, a sample part 312, and a collection part 314 that comprises of a set of optics 316 that focuses the collected light into a detector 318 that is typically a photon counter or a photomultiplier tube (PMT) with a photon counting electronics that collect and process the collected light.

The excitation part 304 is used to illuminate a sample placed in the sample part with a pulsed laser beam. The light emitted by the sample is collected by the set of optics unto the detector. The excitation part is a high intensity pulsed laser source with laser parameters described in US Patent No. 9778177 B2. The pulsed laser beam is processed by a set of optics, including but not limited to polarizers and lenses, before being shone on the sample. For example, the laser beam passes through a Glan Taylor linear polarizer, and through a set of lenses to bring the beam diameter to about 200 µm (e.g., a Galilean reverse beam expander) depending on the diameter of the input beam.

The sample 302 can be any organic (e.g. carbon-based substances such as proteins, nucleic acid, DNA, micelles, vesicles) or inorganic (e.g. metallic particles, synthetic polymers, etc.) substances in solid, liquid or gas form so long as it is dispersed in a liquid medium. It can be placed in tubes, vials, microfluidic devices, micro-titer plates, or any kind of adapted container that allows the laser light to reach the sample and the scattered second harmonic light to leave. This container can be coupled to a chamber or holder to set different conditions of measurements (e.g. temperature, pressure, humidity, etc.).

The collecting part 314 comprises, but is not limited to, a set of optics coupled with a photomultiplier tube (PMT) or any other suitable detector of single photons and process by a photon counter. The collection part of the system is typically mounted in a detection arm as shown in Figure 3. This arm can be put at a fixed scattering angle position or can rotate during the measurement around the sample. The collecting part can also take the form of any typical collection configuration used in any scattering technique; it can comprise of (but is not limited to) any typical elements such as integrating spheres, mirrors, masks, irises, lenses, polarizers, or filters.

For non-resonant second harmonic scattering (SHS) measurements, the intensity of the scattered second harmonic signal is, in general, relatively weak. Compared to the laser source the SH intensity may be in the range from 10 to 14 times weaker in order of magnitude. A leakage from the fundamental beam or instability from the laser source may introduce variations and error in the detected SH intensity. Thus, careful attention should be given to the instrumentation design to obtain an acceptable signal to noise ratio. Starting from the basic second harmonic scattering setup shown in fig. 3, fig. 4 to 6 show exemplary optical layouts for maximizing the signal to noise ratio of second harmonic scattering to observe aggregation in liquid medium.

The goal is to optimize the signal to noise ratio by choosing optical layout that separates the fundamental beam from the second harmonic beam, maximizing the collection efficiency of the second harmonic beam and reduce noise, maximizing the number of generated second harmonic photons.

Figure 4 to Figure 6 show different possible optical layouts for an apparatus for detecting second harmonic scattering (SHS), which layouts that make use of the directionality of the fundamental beam to separate the scattered second harmonic beam. Any of the shown optical layouts may be combined with a set of optical filters such as harmonic separators, band-pass, short-pass, long-pass filters that achieve a combined attenuation of optical density (OD) of about 15, that is, 10⁻¹⁵ of the fundamental beam is transmitted to achieve a fundamental-free measurement of SH intensity.

The apparatus 400 shown in fig. 4 comprises separation means provided as through-hole mirror 402. The through-hole mirror 402 is configured to lets the fundamental beam 404 pass through while collecting the SH beams 406a, 406b, 406c, 406d scattered by the sample 408.

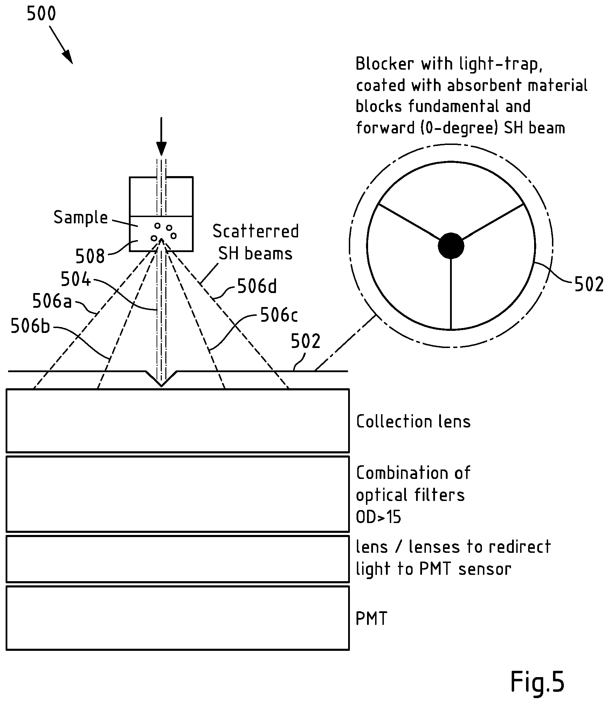

The apparatus 500 shown in fig. 5 comprises separation means provided as a blocker with light trap 502. The blocker with light trap 502 is configured to block the fundamental beam 504 while collecting the SH beams 506a, 506b, 506c, 506d scattered by the sample 508.

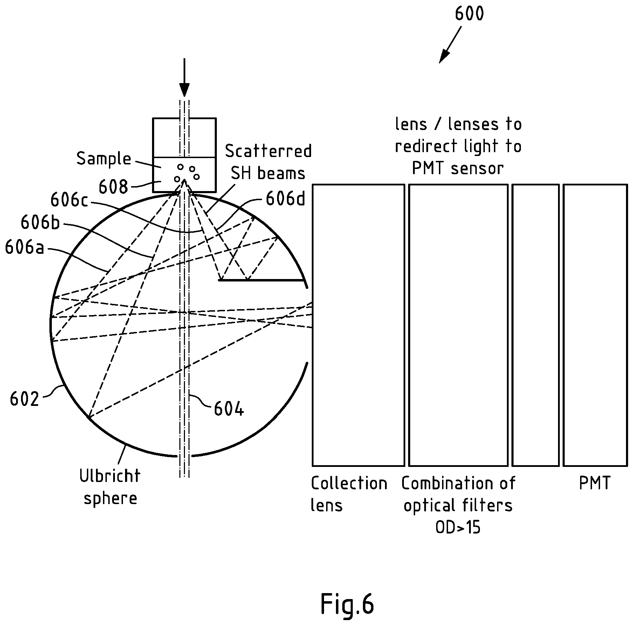

The apparatus 600 shown in fig. 6 comprises separation means provided as Ulbricht sphere 602. The Ulbricht sphere 602 is configured to let the fundamental beam 604 pass-through and collects the SH beams 606a, 606b, 606c, 606d scattered by the sample 608 using multiple diffuse reflections.

The number of aggregation events that can be captured by an optical system is limited to the volume of the sample illuminated by the laser. In order to maximize the chances of capturing aggregation events, it is desirable to maximize the total volume in the sample illuminated by the laser without appreciably heating the sample. Accordingly, a collimated beam (in contrast to a focused beam) that probes the full sample volume along the direction of propagation with maximum allowable diameter may be used. To test the maximum illumination volume that can be use without heating the sample, the second harmonic response of water over time is recorded, using a collimated beam with increasing beam diameter. It has been shown that the SH intensity of pure water decreases with increasing temperature. It can be determined that no or low heating effects are occurring when the SH intensity of pure water over time is relatively flat.

In second harmonic generation, phase matching conditions dictate that the maximum overlap of the two input beams is achieved with collinear propagation, i.e., the two incoming beams are collinear. In contrast, for non-collinear propagation where the two beams approach the sample at an angle, the overlap of the beams is limited depending on the angle between the two beams. Moreover, for pulse beams, the overlap is further limited by the pulse duration of the beam. As an example 200 femtosecond pulse may convert to 60 µm spatial overlap along the direction of propagation. Thus, in order to maximize the generation of second harmonic photons, collinear propagation with the biggest beam diameter possible, without appreciable heating, is preferred.

Phase matching conditions dictate that the strongest SH intensity is in the forward direction, e.g. with an angle in the range of 0-degree. Depending on the size of the aggregate, the forward scattering can dominate the SH signal which prevents detecting the intensity fluctuations induced by the pre-aggregation phase. Thus, the SH intensity in the forward direction, e.g. with an angle in the range of -5 to 5 degrees, may be blocked to enhance the fluctuations in intensity contributed by the other scattering angles.

The dark noise can be reduced by gating the detector with the laser pulse in combination with a photomultiplier tube (PMT) that is optically blind to the wavelength of the fundamental beam, e.g. GaAsP or BiAlkali PMTs from Hamamatsu are blind at wavelength of about 1030 nm. Conversely, silicon-based detectors should be avoided, as they absorb at a wavelength of about 1030 nm.

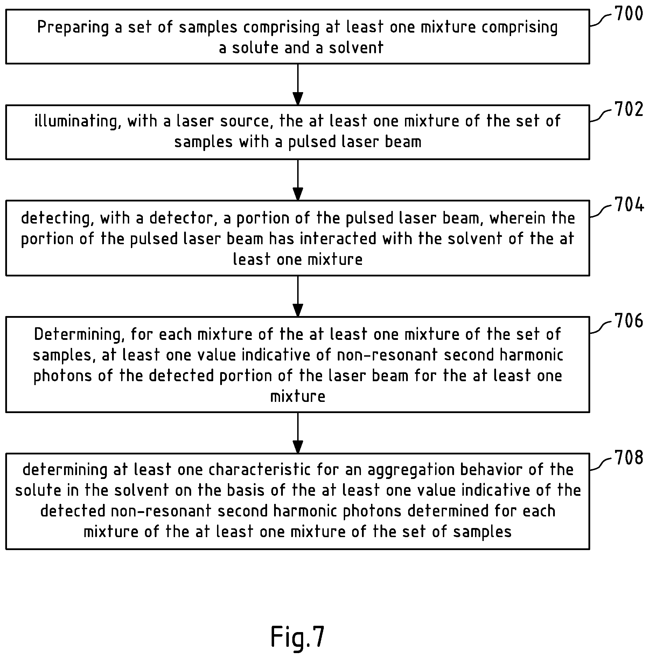

Fig. 7 shows a flow diagram for a method for determining a characteristic for an aggregation state of a solute in a solvent.

In a first step 700, the method comprises preparing a set of samples comprising at least one mixture comprising a solute and a solvent. The prepared samples are mixtures of the same solute in the same solvent, wherein the mixture differ in chemical or physical conditions, which conditions are known or expected to induce the solute to transition from monomers (e.g. dissolved state) to aggregates (e.g. solute is dissolved). The formation of aggregates can be induced by any physical or chemical process. For example, increasing the concentration of the substance disperse in a liquid medium may lead to aggregation.

In an example, following steps may be performed for preparing samples to observe the aggregation of a substance as induced by increasing the concentration of the substance in liquid medium:
(i) defining a first reference mixture with a first concentration at which a priori the solute is dissolved in the solvent or liquid medium ("baseline concentration");
(ii) defining a second reference mixture with a second concentration at which a priori the solute is aggregated in the liquid medium ("aggregate concentration");
(iii) defining a number of concentrations comprises between the first concentration and the second concentration;
(iv) preparing a set of samples having the defined concentrations, respectively.

The method of fig. 7 further comprises illuminating, with a laser source, the at least one mixture of the set of samples with a pulsed laser beam (step 702), detecting, with a detector, a portion of the pulsed laser beam, wherein the portion of the pulsed laser beam has interacted with the solvent of the at least one mixture (step 704), and determining, for each mixture of the at least one mixture of the set of samples, at least one value indicative of non-resonant second harmonic photons of the detected portion of the laser beam for the at least one mixture (step 706).

The used detector may be configured for counting non-resonant second harmonic photons detected on a detection area of the detector, and the value indicative of the non-resonant second harmonic photons may be a count value or an intensity.

For a sample set of a plurality of samples with mixtures having different concentrations of the same solute and the same solvent, respectively, the steps 702, 704 and 706 may be performed for each sample or mixture of the set of samples.

Step 702, step 704 and step 706 may be repeated, for each individual mixture, in order to obtain statistically significant measurements values or values indicative of the non-resonant second harmonic photons detected for the individual mixture. As an example, step 702, step 704 and step 706 may be repeated at least 30 times.

For a sample set of a plurality of samples with mixtures having different concentrations of the same solute and the same solvent, respectively, step 702, step 704 and step 706 may be performed for each sample or mixture of the set of samples.

The method shown in fig. 7 further comprises determining at least one characteristic for an aggregation behavior of the solute in the solvent on the basis of the at least one value indicative of the detected non-resonant second harmonic photons determined for each mixture of the at least one mixture of the set of samples (step 708).

The data collected by the detection part is analyzed by a dedicated algorithm optimized to highlight the dynamical component of the signal (standard deviation or variance), by performing any kind of manipulation capable to evidence the variation in the sample dynamics.

As an example, step 708 may comprise:
(i) calculating, for each individual mixture of a set of sample of a plurality of mixtures having different concentrations of the same solute and the same solvent, the mean value (µ) and the standard deviation (σ) for count values indicatives of non-resonant second harmonic photons detected for individual mixture;
(ii) comparing the calculated mean values (µ) and standard deviation values (σ) with predetermined threshold value for a mean value and a predetermined threshold value for a standard deviation value, respectively, and
(iii) determining a solubility limit of the solute on the basis of the comparison.

The respective predetermined threshold values for a mean value and for a standard deviation value may be predetermined by probing a first reference mixture prepared as disclosed above for the description of step 700 in fig. 7.

In particular, the solubility limit is evidenced by statistically significant increase in the mean and standard deviation relative to the mean (µ_{B}) and standard deviation (σ_{B}) of measurements performed for a reference mixture, wherein the solute is dissolved in the solvent or wherein the solute is under the form of monomers in the solvent.

A statistically significant increase may be determined by means of any one of the followings:
(a) Statistically significant increase in the mean can be tested using a test of means, or "t-test", by testing the hypothesis, µ > µ_{B};
(b) statistically significant increase in the standard deviation can be tested using a test of variance, or "f-test", by testing the hypothesis, σ > σ_{B}; or
(c) setting a threshold in the mean (µ), wherein above a predetermined threshold, there is a statistically significant increase. As an example, the predetermined threshold can be set to (µ_{B} + 3* σ_{B}).

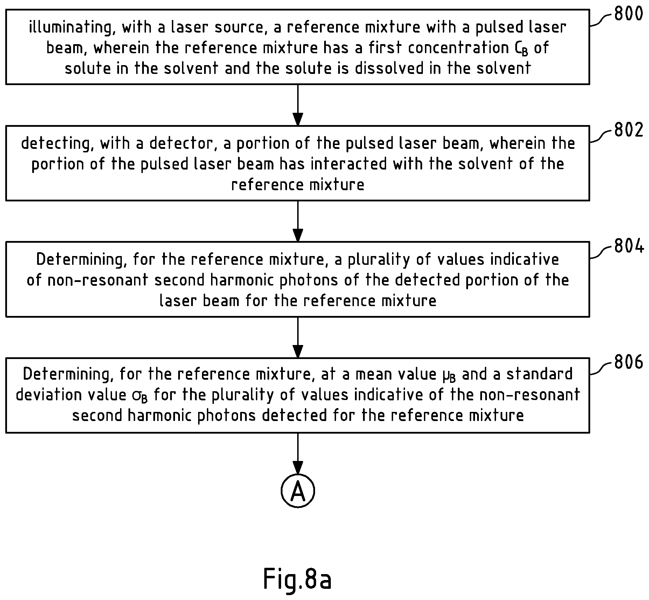

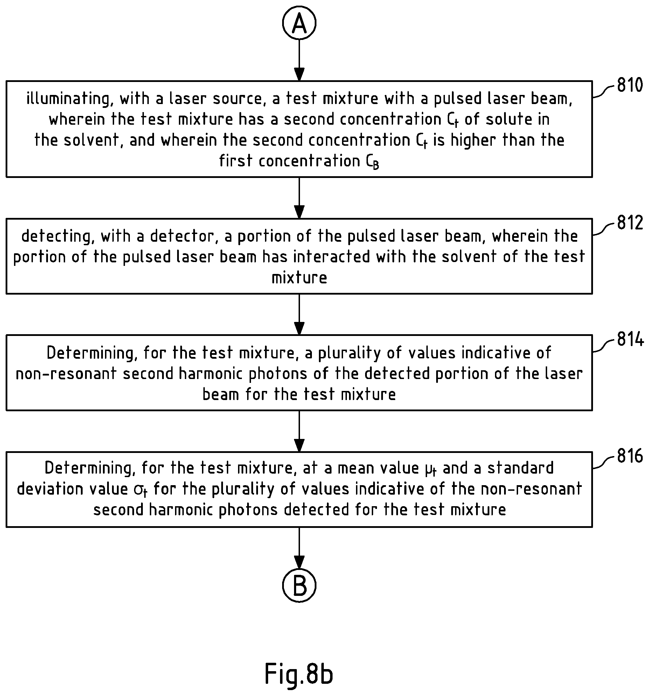

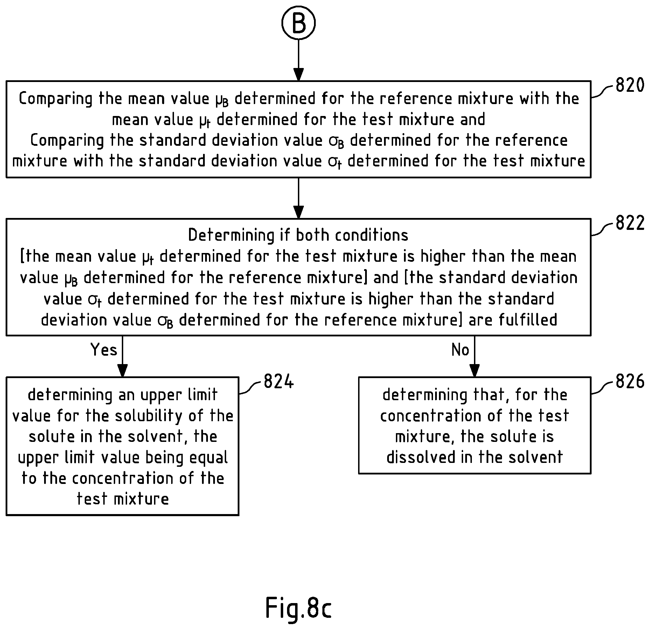

Fig. 8a, 8b and 8c show, respectively, a first, a second and a third part of a flow diagram for a second method for determining a characteristic for an aggregation behavior of a solute in a solvent.

The first part of the method as shown in fig. 8a comprises:
illuminating, with a laser source, a reference mixture with a pulsed laser beam, wherein the reference mixture has a first concentration C_{B} of solute in the solvent and the solute is dissolved in the solvent (step 800);
detecting, with a detector, a portion of the pulsed laser beam, wherein the portion of the pulsed laser beam has interacted with the solvent of the reference mixture (step 802);
determining, for the reference mixture, a plurality of values indicative of non-resonant second harmonic photons of the detected portion of the laser beam for the reference mixture (step 804); and
determining, for the reference mixture, at a mean value µ_{B} and a standard deviation value σ_{B} for the plurality of values indicative of the non-resonant second harmonic photons detected for the reference mixture (step 806).

The second part of the method as shown in fig. 8b comprises:
illuminating, with a laser source, a test mixture with a pulsed laser beam, wherein the test mixture has a second concentration Ct of solute in the solvent, and wherein the second concentration Ct is higher than the first concentration C_{B} (step 810);
detecting, with a detector, a portion of the pulsed laser beam, wherein the portion of the pulsed laser beam has interacted with the solvent of the test mixture (step 812);
determining, for the test mixture, a plurality of values indicative of non-resonant second harmonic photons of the detected portion of the laser beam for the test mixture (step 814); and
determining, for the test mixture, at a mean value µₜ and a standard deviation value σₜ for the plurality of values indicative of the non-resonant second harmonic photons detected for the test mixture (step 816).

The third part of the method as shown in fig. 8c comprises:
comparing the mean value µ_{B} determined for the reference mixture with the mean value µₜ determined for the test mixture and comparing the standard deviation value σ_{B} determined for the reference mixture with the standard deviation value σₜ determined for the test mixture (step 820);
determining if both conditions [the mean value µₜ determined for the test mixture is higher than the mean value µ_{B} determined for the reference mixture] and [the standard deviation value σₜ determined for the test mixture is higher than the standard deviation value σ_{B} determined for the reference mixture] are fulfilled (step 822);
if both conditions are determined, at step 822, as being fulfilled, then:
   determining an upper limit value for the solubility of the solute in the solvent, the upper limit value being equal to the concentration of the test mixture (step 824); and
   if at least one of both conditions is determined, at step 822, as not being fulfilled, then: determining that, for the concentration of the test mixture, the solute is dissolved in the solvent (step 826).

For a sample set of a plurality of samples with mixtures having different concentrations of the same solute and the same solvent, respectively, the second part of the method as shown in fig. 8b (steps 810 to 816), and the third part of the method as shown in fig. 8c (steps 820 to 826) may be performed for each sample or mixture of the set of samples.

It is to be noted that, for a sample set of a plurality of samples with mixtures having different concentrations of the same solute and the same solvent, respectively, when step 824 is performed and an upper limit value for the solubility of the solute in the solvent is determined as being equal to the concentration of the test mixture, a lower limit for the solubility of the solute in the solvent may be determined as being equal to the concentration of the mixture having the next lower concentration of solute in the solvent.

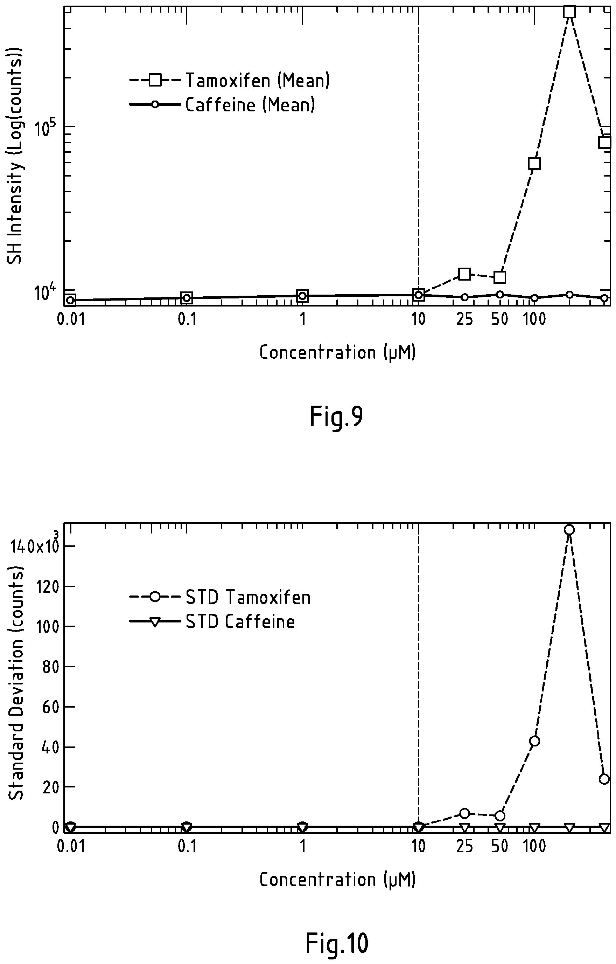

Fig. 9 and Fig. 10, respectively, show an example for mean values and for standard deviation values determined for a plurality of mixtures of Tamoxifen in water and for a plurality of mixtures of caffeine in water. The shown values were determined for measurements in mixtures of Tamoxifen in a mixture of phosphate buffered saline (PBS, pH 7.4) and 1% dimethyl sulfoxide (DMSO). A thermodynamic solubility of 8.5 µM was expected, on the basis of prior literature.

Both fig. 9 and fig. 10 show a jump in intensity and standard deviation above 10 µM at the solubility limit of Tamoxifen, which jump indicates a transition into the dynamic pre-aggregation phase. The drop in intensity indicates a transition into stable aggregation. Monomers which are small with isotropic distribution of solvent molecules emit small amounts of SH photons. During the pre-aggregation phase, transient aggregates with non-isotropic distribution of solvent molecules surrounding them lead to a much higher intensity, in combination with intensity fluctuations.

Further increasing the concentration, stable aggregates with isotropic distribution of solvent molecules lead to a different intensity versus concentration behavior.

Performing a method for determining a range for the solubility limit of Tamoxifen with the values shown in fig. 9 and 10 may comprise:
(i) Determining a reference baseline concentration of 0.01 µM and a reference aggregate concentration of 400 µM;
(ii) Preparing a series of mixtures having a concentration of Tamoxifen of, respectively, 0.01, 0.1, 1, 10, 25, 50, 100, 200, and 400 µM;
(iii) repeating, at least 30 times: illuminating the mixtures with a pulsed laser beam, detecting non-resonant second harmonic photons and determining a count value of photons for each mixture;
(iv) determining a standard deviation value and a mean value of the determined count values for each mixture, wherein the standard deviation value and a mean value for the mixture having the baseline concentration as determined as threshold values, respectively,
(v) comparing the standard deviation values and a mean values determined for the mixtures having a concentration of 0.1, 1, 10, 25, 50, 100, or 200 µM, respectively, with the determined threshold values;
(vi) determining that a statistically significant increase in mean and standard deviation relative to the threshold values is true at concentration = 25 µM, the conditions *σ >* σ*_{B}* and µ > µ_{B} are both true;
(vii) determining a range for the solubility limit of Tamoxifen as follows: the lower limit is 10 µM and the upper limit is 25 µM.

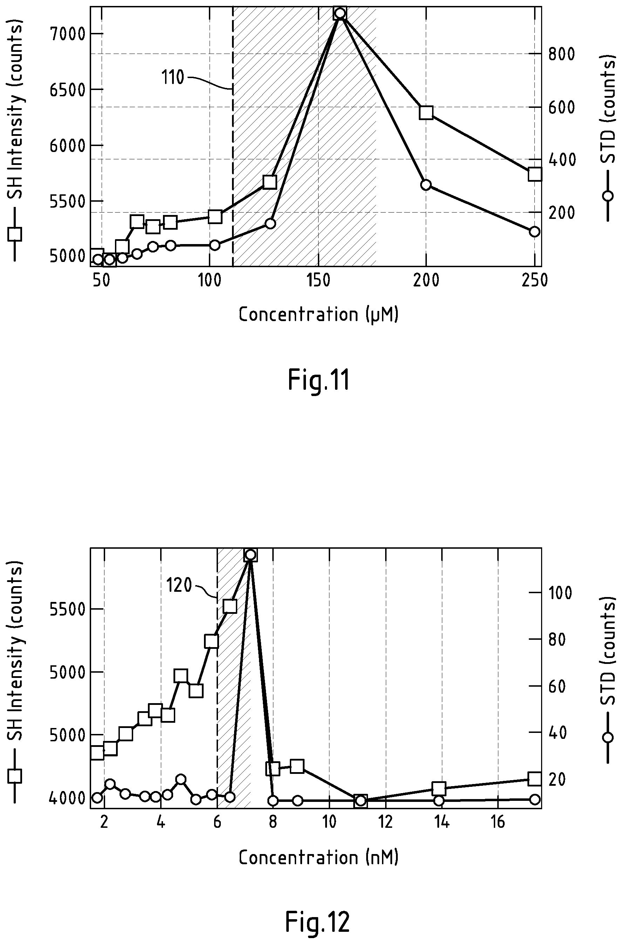

Fig. 11 shows measurements for a plurality of mixtures of undecanol in water as a liquid-liquid system with various concentrations, wherein the reported measurement values are indicative of non-resonant second harmonic photons detected for the plurality of mixtures of undecanol in water.

Fig. 12 shows measurements for a plurality of mixtures of 1,2-dimyristoyl-sn-glycero-3- phosphocholine (DMPC) in water with various concentrations, wherein the reported measurement values are indicative of non-resonant second harmonic photons detected for the plurality of mixtures of DMPC lipids in water.

In both fig. 11 and 12, the measured SH intensity (left axis) and the corresponding standard deviation STD (right axis) are reported. From earlier studies, undecanol is listed as insoluble in water and solubility limit at 110 µM has been estimated. From earlier thermodynamic measurements, a Critical Micelle Concentration (CMC) value is expected at a concentration of 6 nM of DMPC in water. These expected solubility limits estimated on the basis of earlier studies are indicated by dashed vertical lines 110 and 120 in fig. 11 and fig. 12, respectively.

The reported measurement values indicative of non-resonant second harmonic photons detected according to the present disclosure show a drastic increase in both the second harmonic intensity and the standard deviation, as can be observed for the measurement values comprised within the dashed zones in fig. 11 and 12, respectively. These increases are characteristic for a solubility limit. Accordingly, the shown measurements demonstrate that the solubility limit can be measured by detecting non-resonant second harmonic photons issued from an interaction of a pulsed laser beam with mixtures provided with various concentrations of solvent in solute, and in particular by determining the concentration at which a jump in intensity relative to measurements performed for a reference mixture occurs.

## Claims

1. Method for determining an aggregation state of a solute in a solvent, comprising:
- illuminating (702), with a laser source, at least one mixture comprising the solute and the solvent with a pulsed laser beam,
- detecting (704), with a detector, a portion of the pulsed laser beam, wherein the portion of the pulsed laser beam has interacted with the at least one mixture, **characterized**
- **in that** detecting (704) a portion of the pulsed laser beam comprises:
- detecting non-resonant second harmonic photons, wherein the non-resonant second harmonic photons issue from an interaction of the pulsed laser beam with the solvent of the at least one mixture, and
- determining (706) at least one value indicative of the non-resonant second harmonic photons detected for the at least one mixture, and
- **in that** the method further comprises:
- determining (708) at least one characteristic for an aggregation behavior of the solute in the solvent on the basis of the at least one value indicative of the detected non-resonant second harmonic photons determined for the at least one mixture.

2. Method according to claim 1,
- wherein, for the at least one mixture, a plurality of values indicative of the detected non-resonant second harmonic photons is determined,
- wherein at least one statistical value is determined for the plurality of values indicative of the detected non-resonant second harmonic photons, and
- wherein the at least one characteristic for the aggregation behavior of the solute in the solvent is determined on the basis of a comparison of the at least one statistical value with a predetermined threshold value.

3. Method according to claim 1,
- wherein the at least one mixture comprises a first mixture and a second mixture,
- wherein at least one value indicative of the non-resonant second harmonic photons detected for the first mixture is determined,
- wherein at least one value indicative of the non-resonant second harmonic photons detected for the second mixture is determined, and
- wherein the at least one characteristic for an aggregation behavior of the solute in the solvent is determined on the basis of the at least one value determined for the first mixture and on the basis of the at least one value determined for the second mixture.

4. Method according to claim 3,
- wherein, for the first mixture,
- a plurality of values indicative of the non-resonant second harmonic photons detected for the first mixture is determined, and
- at least one first statistical value is determined for the plurality of values indicative of the detected non-resonant second harmonic photons,
- wherein, for the second mixture,
- a plurality of values indicative of the non-resonant second harmonic photons detected for the second mixture determined, and
- at least one second statistical value is determined for the plurality of values indicative of the detected non-resonant second harmonic photons,
- wherein the at least one characteristic for the aggregation behavior of the solute in the solvent is determined on the basis of a comparison of the at least one first statistical value determined for the first mixture with the at least one second statistical value determined for the second mixture.

5. Method according to claim 3 or 4,
- wherein the first mixture and the second mixture differ in at least one of the following: concentration of the solute in the solvent, temperature, pressure, pH, conductivity, composition of the solvent.

6. Method according to any one of the claims 3 to 5,
- wherein, in the first mixture, the solute is provided in the solvent with a first concentration C_{B} and the solute is dissolved in the solvent,
- wherein the second mixture has a second concentration Ct of solute in the solvent, and
- wherein the second concentration Ct is higher than the first concentration C_{B}.

7. Method according to any one of the claims 3 to 5,
- wherein, in the first mixture, the solute is provided in the solvent with a first concentration C_{Agg} and the solute is aggregated in the solvent,
- wherein the second mixture has a second concentration Ct of solute in the solvent, and
- wherein the second concentration Ct is lower than the first concentration C_{Agg}.

8. Method according to any one of the claims 2 and 4 to 7,
wherein the at least one statistical value comprises a standard deviation σ and / or a mean value µ.

9. Method according to any one of the preceding claims,
wherein the at least one characteristic for the aggregation behavior of the solute in the solvent comprises a value range for a solubility limit or a value for a solubility limit.

10. Method according to any one of the preceding claims,
wherein the at least one characteristic for the aggregation behavior of the solute in the solvent comprises at least one of the following: a piece of information on the presence of aggregated solute in the mixture, a piece of information on a growth of aggregates, a shape of an aggregate, a size of an aggregate, a spatial repartition or packing of aggregated solute in the solvent, a density of aggregates in the solvent, a shape difference between aggregates, a state of isotropy or anisotropy of aggregate, a chemical state of an aggregate, a surface state of an aggregate.

11. Method according to any one of the preceding claims,
- wherein the solvent is provided as liquid, and
- wherein the solute is provided as solid or as liquid or as gas.

12. Computer readable medium comprising instructions which, when executed by an apparatus (300, 400, 500, 600), cause the apparatus (300, 400, 500, 600) to perform at least the following:
- determining (706) at least one value indicative of detected non-resonant second harmonic photons, wherein the non-resonant second harmonic photons issue from an interaction of a pulsed laser beam with a solvent of a mixture comprising the solvent and a solute, and
- determining (708) at least one characteristic for an aggregation behavior of the solute on the basis of the at least one value indicative of the detected second harmonic photons.

13. Computer readable medium according to claim 12, further comprising instructions, which when executed by the apparatus (300, 400, 500, 600), cause the apparatus (300, 400, 500, 600) to perform at least the following:
- determining a plurality of values indicative of the non-resonant second harmonic photons detected for the at least one mixture,
- determining at least one statistical value for the plurality of values indicative of the non-resonant second harmonic photons detected for the at least one mixture,
- comparing the at least one statistical value with a predetermined threshold value, and
- determining the at least one characteristic for the aggregation behavior of the solute in the solvent on the basis of the comparison.

14. Computer readable medium according to claim 12, further comprising instructions, which when executed by the apparatus (300, 400, 500, 600), cause the apparatus (300, 400, 500, 600) to perform at least the following:
- determining a plurality of values indicative of the non-resonant second harmonic photons detected for a first mixture of the solute and the solvent,
- determining at least one statistical value for the plurality of values indicative of the non-resonant second harmonic photons detected for the first mixture,
- determining a plurality of values indicative of the non-resonant second harmonic photons detected for a second mixture of the solute and the solvent,
- determining at least one statistical value for the plurality of values indicative of the non-resonant second harmonic photons detected for the second mixture,
- comparing of the at least one first statistical value determined for the first mixture with the at least one second statistical value determined for the second mixture, and
- determining the at least one characteristic for the aggregation behavior of the solute in the solvent on the basis of the comparison

15. Apparatus (300, 400, 500, 600) for determining an aggregation state of a solute in a solvent, in particular for determining an aggregation state of a solute in a solvent according to any one of the preceding claims, comprising:
- a laser source (306) configured for emitting a pulsed laser beam (310),
- a separator (402, 502, 602) for separating a scattered portion (406a, 406b, 406c, 406d, 506a, 506b, 506c, 506d, 606a, 606b, 606c, 606d) of the pulsed laser beam from a non-scattered portion (404, 504, 604) of the pulsed laser beam (310), and
- a detector (318) configured for detecting, at least in part, the scattered portion (406a, 406b, 406c, 406d, 506a, 506b, 506c, 506d, 606a, 606b, 606c, 606d) of the pulsed laser beam (310) emitted by the laser source (306),
**characterized**
- **in that** a processor with a computer readable medium according to any one of the claims 12 to 14 is provided.
